## Europäisches Patentamt
## European Patent Office
## Office européen des brevets

(19)

(11) Numéro de publication: **0 123 568**
**B1**

(12) # FASCICULE DE BREVET EUROPEEN

(45) Date de publication du fascicule du brevet:
**13.05.87**

(51) Int. Cl.⁴: **G 09 G 3/34**, G 09 G 3/36

(21) Numéro de dépôt: **84400286.5**

(22) Date de dépôt: **10.02.84**

(54) **Imageur matriciel à dispositif de compensation du couplage entre les lignes et les colonnes.**

(30) Priorité: **16.02.83 FR 8302494**

(43) Date de publication de la demande:
**31.10.84 Bulletin 84/44**

(45) Mention de la délivrance du brevet:
**13.05.87 Bulletin 87/20**

(84) Etats contractants désignés:
**CH DE GB IT LI NL SE**

(56) Documents cités:
**EP - A - 0 055 153**
**FR - A - 2 489 569**
**US - A - 4 281 324**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Clerc, Jean Frédéric, 10, Allée du Pré Blanc, F-38240 Meyian (FR)**
Inventeur: **Sarrasin, Denis, 28, rue du Grand Francois, F-38140 Rives Sur Yvette (FR)**

(74) Mandataire: **Mongrédien, André et al, c/o BREVATOME 25, rue de Ponthieu, F-75008 Paris (FR)**

## Description

La présente invention a pour objet un imageur matriciel à dispositif de compensation du couplage entre les lignes et les colonnes. Elle trouve une application en opto-électronique, dans la réalisation d'afficheurs à cristaux liquides utilisés notamment comme convertisseurs d'informations électriques en informations optiques.

Les afficheurs matriciels comprennent, de façon connue, une cellule d'affichage constituée par deux parois isolantes transparentes et par un matériau comprenant une pluralité de zones réparties en matrices et intercalées entre une première famille d'électrodes recouvrant l'une des deux parois et définissant p lignes de commande et une seconde famille d'électrodes recouvrant l'autre paroi, constituée de bandes conductrices parallèles et définissant q colonnes de commande, la ligne $X_i$, où i est un entier tel que $1 \leqslant i \leqslant p$, et la colonne $Y_j$, où j est un entier tel que $1 \leqslant j \leqslant q$, définissant une zone $X_i Y_j$ du matériau et comprenant des moyens permettant de délivrer sur les lignes et les colonnes des signaux d'excitation appropriés servant à exciter une propriété optique du matériau.

On connaît de nombreux dispositifs de ce genre pour lesquels l'excitation est électrique et qui utilisent par exemple comme matériau sensible, un film de cristal liquide (voir par exemple le brevet US-A-4 281 324). L'invention s'applique particulièrement bien à de tels dispositifs, mais elle s'applique de manière plus générale à tous les dispositifs comprenant un matériau dont une propriété optique peut être modifiée à l'aide d'une excitation électrique. Le matériau peut être un corps solide ou liquide, amorphe ou cristallin. La propriété optique peut être une opacité, un indice de réfraction, une transparence, une absorption, une diffusion, une diffraction, une convergence, un pouvoir rotatoire, une biréfringence, une intensité réfléchie dans un angle solide déterminé, etc.

Un procédé de commande connu de tels dispositifs d'affichage consiste par exemple dans le cas d'une cellule à cristaux liquides où l'excitation est de nature électrique, à appliquer sur la ligne $X_i$ une tension $V_{xi}$ périodique, de valeur moyenne nulle et sur les autres lignes une tension nulle et à appliquer sur les colonnes $Y_j$ des tensions $V_{yj}$ périodiques de valeur moyenne nulle, de même durée et de même fréquence que la tension $V_{xi}$ mais qui sont déphasées par rapport à celle-ci d'une quantité $\Phi_{ji}$. La valeur de ce déphasage $\Phi_{ji}$ comprise entre $0°$ pour des signaux $V_{xi}$ et $V_{yi}$ en phase et $180°$ pour des signaux $V_{xi}$ et $V_{yi}$ en opposition de phase commande le niveau de gris du point $X_i Y_j$.

En réalité, les fronts de montée des tensions $V_{yj}$ d'adressage parvenant sur les colonnes d'un afficheur matriciel perturbent, par effet capacitif, les tensions appliquées sur les lignes. En particulier, une ligne non sélectionnée, normalement soumise à une tension nulle, est le siège d'une tension parasite.

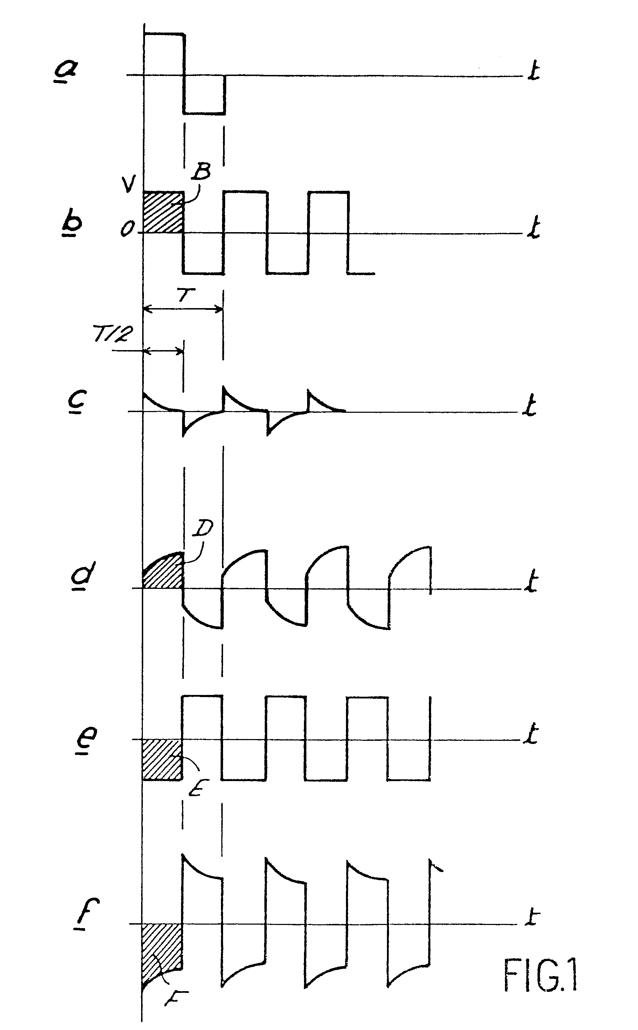

On a représenté sur la figure 1 les signaux apparaissant sur les lignes d'électrodes et les colonnes d'électrodes. Toutes les lignes d'électrodes sont reliées à la masse sauf une ligne $X_i$, ou $1 \leqslant i \leqslant p$, à laquelle on applique un créneau de tension tel que le signal a. On applique par ailleurs simultanément sur chaque colonne une tension périodique. La différence de phase $\Phi_{ij}$ entre le signal a appliqué sur la ligne $X_i$ et le signal appliqué sur la colonne $Y_j$ détermine le niveau de gris du point $X_i Y_j$. Pour simplifier la représentation des signaux, on s'est placé dans le cas où les signaux colonnes sont soit en phase ($\Phi_{ij} = 0$), soit en opposition de phase ($\Phi_{ij} = 180°$) avec le signal a. Ceci ne constitue évidemment pas une limitation du domaine de l'invention qui englobe aussi le cas où le déphasage $\Phi_{ij}$ est quelconque. Dans un tel cas cependant, la tension aux bornes de la cellule $X_i Y_j$ est plus complexe. Pour cette raison, nous représenterons des signaux colonnes uniquement en phase ou en opposition de phase avec le signal ligne. Les signaux colonnes sont donc représentés par le signal b en phase avec le signal a ou par le signal e en opposition de phase avec le signal a.

Par effet capacitif, il apparaît sur les lignes reliées à la masse un signal parasite tel que le signal c.

L'origine de ce signal parasite est la suivante. A une date t comprise entre 0 et T/2, où T est la période des signaux appliqués sur les électrodes, les tensions sur les électrodes sont constantes et égales à $+V$ ou $-V$. Sur une électrode colonne j soumise à une tension $+V$, il apparaît alors en regard de la zone $X_i Y_j$, où i est une ligne reliée à la masse, une charge électrique $-Q$ et sur l'électrode ligne i, en regard de la zone $X_i Y_j$, une charge électrique $+Q$. Sur une électrode colonne soumise à une tension $-V$, la charge électrique créée sera inversée ainsi que la charge électrique apparaissant sur la ligne i. Si l'on note $\Sigma_Q$ la somme algébrique des charges électriques présentes sur la ligne i, $\Sigma_Q$ n'est pas nulle en général; elle ne l'est que s'il y a autant d'électrodes colonnes soumises à une tension $+V$ que d'électrodes colonnes soumises à une tension $-V$. A une date t comprise entre T/2 et T on aura de manière symétrique une charge $-\Sigma_Q$ sur la ligne i. A la date T/2, il y a donc apport de $-2\Sigma_Q$ charges électriques sur la ligne i et, le matériau d'affichage étant isolant, ces charges sont apportées par l'électrode ligne i. Le signal c traduit le courant électrique qu'est ce transfert de charges. Ce signal c est en phase avec le signal colonne majoritaire, c'est-à-dire qu'il est en phase avec le signal b si les signaux colonnes sont en majorité en phase avec le signal a et qu'il est en phase avec le signal e si en majorité les signaux colonnes sont en opposition de phase avec le signal a. Sur la figure 1, un signal c est représenté en phase avec le signal b. A l'intersection d'une ligne non sélectionnée et d'une colonne sur laquelle est appliqué le signal b, la différence de potentiel appliquée au matériau devrait être égale au signal b. En fait, à cause de l'effet capacitif parasite, la tension appliquée à ce point est représentée par le signal d égal à la différence entre les signaux b et c. De même, les points appartenant à une ligne non sélectionnée et dont le signal colonne est représenté par le signal e, sont soumis à une différence de potentiel représentée par le signal f égal à la différence entre les signaux e et c au lieu d'être soumis à une différence de potentiel représentée par le signal e.

S'il n'y avait pas de parasites, un point d'une ligne reliée à la masse et soumis à une différence de potentiel représentée par le signal $b$ et un point de la même ligne soumis à une différence de potentiel représentée par le signal $e$, seraient soumis à la même excitation, puisque l'aire B, du signal $b$ est égale à l'aire E, du signal $e$. A cause du couplage parasite entre les lignes et les colonnes, les signaux $b$ et $e$ sont respectivement remplacés par les signaux $d$ et $f$. Dans le premier cas, l'aire sous la courbe du signal $d$ égale à D est minorée. Dans le second, l'aire sous la courbe du signal $f$ égale à F est majorée. Or, l'excitation du matériau varie comme le carré de la différence de potentiel c'est-à-dire comme l'aire sous la courbe du signal. Il résulte donc, de cette différence d'aire, un phénomène visuel parasite tel que des trainées sur l'écran.

L'objectif de l'invention est de remédier à ces effets visuels parasites. Pour cela, l'invention propose d'adjoindre au système d'électrodes colonnes au moins une électrode de compensation chargée d'apporter sur chaque ligne des charges électriques telles que la somme algébrique des charges électriques sur chaque ligne soit nulle à chaque instant. Le courant traversant chacune des lignes non sélectionnées est alors nul à chaque commutation, c'est-à-dire aux dates mutiples de T/2 et donc sa tension est aussi nulle.

De manière plus précise, l'invention a pour objet un imageur matriciel commandé électriquement, comprenant un matériau dont on peut modifier la caractéristique optique, ce matériau étant intercalé entre une première famille de p lignes d'électrodes parallèles et une seconde famille de q colonnes d'électrodes parallèles, les lignes et les colonnes étant croisées, une zone $X_{ij}$ du matériau étant définie par la région du matériau recouvert par la ligne i, où i est un entier tel que $1 \leqslant i \leqslant p$, et par la colonne j, où j est un entier tel que $1 \leqslant j \leqslant q$, les lignes et les colonnes servant à véhiculer des signaux électriques provoquent une excitation du matériau propre à modifier sa caractéristique optique, caractérisé en ce qu'il comprend en outre un dispositif de compensation du couplage entre les lignes et les colonnes constitué d'au moins une électrode de compensation, croisant toutes les électrodes de la première famille d'électrodes et étant séparées de celles-ci par un diélectrique, et étant parallèle aux électrodes de la seconde famille d'électrodes et des moyens pour porter cette électrode de compensation à une tension appropriée, telle qu'apparaissent des charges électriques sur chaque ligne non sélectionnée d'électrode de manière que la somme algébrique des charges électriques sur chacune desdites lignes d'électrodes soit nulle à chaque instant.

Selon un mode de réalisation privilégié, le dispositif de compensation de couplage comprend deux électrodes de compensation disposées de part et d'autre des q électrodes de la seconde famille d'électrodes.

Selon une caractéristique secondaire, le diélectrique entre les électrodes de compensation et les électrodes de la première famille est le même que le diélectrique entre les électrodes de la première famille et les électrodes de la seconde famille.

D'autres caractéristiques et avantages de l'invention ressortiront mieux de la description qui va suivre, donnée à titre purement illustratif et non limitatif. Pour plus de clarté, la description se réfère à un dispositif d'affichage matriciel à cristal liquide dont la propriété optique varie en fonction du champ électrique qui lui est appliqué. Comme on l'a indiqué plus haut, l'invention est d'application beaucoup plus générale, mais ces dispositifs d'affichage étant actuellement bien connus et largement utilisés, il est préférable d'effectuer la description sur cet exemple.

La description se réfère à des figures annexées, dans lesquelles:

la figure 1 déjà décrite montre les perturbations introduites sur les signaux lignes et colonnes d'un afficheur matriciel selon l'art connu,

la figure 2 représente un afficheur matriciel conforme à l'invention qui élimine les signaux parasites représentés sur la figure précédente,

la figure 3 représente l'état électrique d'une ligne non sélectionnée et des électrodes colonnes.

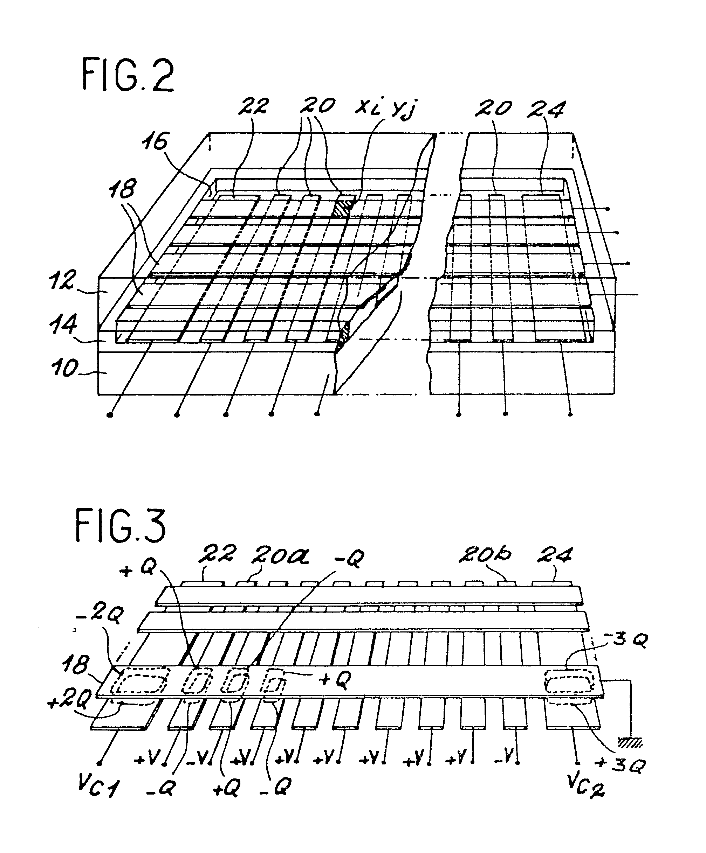

Sur la figure 2, on a représenté un afficheur matriciel conforme à l'invention. Il comprend une cellule d'affichage à bandes croisées comportant deux parois 10 et 12, généralement transparentes, disposées de part et d'autre d'une cale d'épaisseur 14, en matériau isolant, définissant un volume 16 qui est occupé, lorsque la cellule est montée, par le matériau dont on commande une caractéristique optique, par exemple un film de cristal liquide. Sur la paroi 12, est déposée une première famille de p lignes d'électrodes 18 et sur la paroi 10, une deuxième famille de q colonnes d'électrodes 20, constituée chacune par une série de bandes parallèles conductrices transparentes, réalisées par exemple en oxyde d'indium, notées $X_i$ pour les lignes et $Y_j$ pour les colonnes. La surface utile du cristal liquide est ainsi décomposée en une mosaïque de zones correspondant aux zones de recouvrement des deux familles d'électrodes, chaque zone correspondant au recouvrement de deux bandes $X_i$ et $Y_j$, et qui peut, de ce fait, être repérée par la notation $X_i$, $Y_j$.

L'excitation d'une zone, c'est-à-dire la commande d'une propriété optique du cristal liquide contenu dans cette zone, s'effectue en appliquant sur les électrodes $X_i$ et $Y_j$ des tensions électriques, délivrées par des sources d'alimentation électrique, non représentées, qui entraînent l'apparition d'un champ électrique au sein du cristal liquide. On fait ainsi apparaître une image sur l'ensemble de la cellule en la définissant point par point et en sensibilisant les zones les unes après les autres selon des principes connus de commande séquentielle, mettant à profit le temps important de décroissance de l'effet optique induit dans le cristal liquide.

Selon l'invention, cet afficheur matriciel comprend en outre des électrodes de compensation. Sur la figure 2, on a représenté deux électrodes de compensation 22 et 24 parallèles aux électrodes colonnes et croisant les p lignes d'électrodes. Le rôle de ces électrodes de compensation 22 et 24 est d'apporter sur chacune des lignes non sélectionnées des charges électriques telles que la somme algébrique à chaque instant des charges électriques sur chacune des lignes non sélectionnées soit nulle.

Sur la figure 3, on a représenté l'ensemble des électrodes colonnes 20a et 20b ainsi que les électrodes de compensation 22 et 24, et une électrode ligne 18 non sélectionnée, c'est-à-dire reliée à la masse. On a aussi représenté schématiquement les charges électriques localisées sur chacune de ces électrodes. Pour plus de clarté, on suppose, comme dans le cas de la figure 1, que les tensions appliquées sur les électrodes colonnes 20 sont soit en phase, soit en opposition de phase, avec le créneau de tension appliqué sur l'électrode ligne sélectionnée, non représentée. A un instant donné, on aura donc sur certaines électrodes colonnes 20a une tension notée $+V$ et sur d'autres électrodes colonnes 20b une tension en opposition de phase, c'est-à-dire une tension $-V$. Les tensions appliquées sont les tensions périodiques de période T. Pendant une durée T/2, par exemple entre les dates 0 et T/2, le signal appliqué sur chaque colonne aura donc un certain signe. Le signe de cette tension s'inversera à la date T/2. De manière plus générale, cette tension s'inversera de manière périodique à des intervalles de temps séparés par une durée T/2. A titre d'exemple non limitatif, l'afficheur matriciel représenté sur la figure 3 comprend 9 colonnes d'électrodes. Chacune de ces électrodes est soumise à une tension $+V$ ou $-V$ comme représenté sur la figure. A l'intersection de chacune de ces électrodes colonnes avec l'électrode ligne 18 reliée à la masse, apparaissent des charges électriques. Sur une électrode colonne 20a soumise à une tension positive $+V$ apparaît une charge électrique $-Q$ et en regard sur la ligne 18 une charge électrique $+Q$. Ches charges sont localisées sur la zone $X_i Y_j$. La somme des charges électriques apparaissant sur l'électrode ligne 18 n'est pas nulle. Il est facile de voir que la somme des charges algébriques présentes sur l'électrode ligne 18 est proportionnelle, au signe près, à la somme algébrique des tensions appliquées sur les électrodes colonnes 20a et 20b. Dans le cas de la figure, la somme des charges électriques est égale à 5Q. Il convient donc d'appliquer sur les électrodes de compensation 22 et 24 des tensions proportionnelles à la somme algébrique des tensions appliquées sur les électrodes colonnes 20a et 20b, pour apporter $-5Q$ charges qui annuleront la somme algébrique des charges présentes sur l'électrode ligne 18.

On peut par exemple appliquer une tension $V_{c1}$ sur l'électrode de compensation 22 qui est porportionnelle à la somme algébrique des tensions appliquées sur les 4 électrodes colonnes les plus proches d'elle et une tension $V_{c2}$ sur l'électrode de compensation 24 qui est proportionnelle à la somme algébrique des tensions appliquées sur les 5 autres électrodes colonnes. Cela revient à apporter $-2Q$ charges sur l'électrode de compensation 22 et $-3Q$ sur l'électrode de compensation 24. On peut aussi envisager d'appliquer des tensions $V_{c1}$ et $V_{c2}$ identiques. De manière générale, toute combinaison aboutissant à annuler les charges électriques sur l'électrode ligne 18 est possible.

On sait que la charge Q d'un condensateur est égale à $\frac{1}{4\pi} \frac{\varepsilon}{d} S \, U$ où

    ε est la permittivité électrique du diélectrique

    S la surface des électrodes du condensateur

    U la différence de potentiel entre les électrodes du condensateur

    d la distance entre électrodes.

La charge électrique présente sur l'électrode ligne 18 créée par les q électrodes colonnes 20a et 20b est donc égale à $\frac{1}{4\pi} \cdot \frac{\varepsilon_{c1}}{d} S \Sigma V$ où $\varepsilon_{c1}$ est la permittivité électrique du cristal liquide, d la distance entre l'électrode ligne 18 et les électrodes colonnes 20a et 20b, S la surface d'une zone $X_i Y_j$ et $\Sigma V$ la somme algébrique des tensions appliquées sur les q électrodes colonnes 20a et 20b. Pour annuler cette charge électrique, on peut par exemple utiliser une électrode de compensation 22 identique aux électrodes colonnes 20, séparée des électrodes lignes 18 par le cristal liquide. Cela suppose que l'électrode de compensation 22 peut être soumise à un potentiel compris entre $-qV$ et $+qV$ (s'il y a une seule électrode de compensation).

Une autre solution également possible consiste à utiliser entre l'électrode de compensation 22 et les électrodes lignes 18 un diélectrique dont la permittivité électrique ε est différente de celle du cristal liquide. On peut jouer également sur les paramètres d ou S. De manière générale, toute forme de réalisation aboutissant à apporter des charges électriques sur une ligne d'électrodes 18 annulant la somme algébrique des charges électriques sur cette électrode est conforme à l'invention.

**Revendications**

1. Imageur matriciel commandé électriquement, comprenant un matériau (14, Fig. 2) dont on peut modifier la caractéristique optique, ce matériau (14) étant intercalé entre une première famille de p lignes d'électrodes (18, Fig. 2, 3) parallèles et une seconde famille de q colonnes d'électrodes (20, Fig. 2; 20a, 20b, Fig. 3) parallèles, les lignes et les colonnes étant croisées, une zone $X_{ij}$ du matériau étant définie par la région du matériau recouvert par la ligne i, où i est un entier tel que $1 \leqslant i \leqslant p$, et par la colonne j, ou j est un entier tel que $1 \leqslant j \leqslant q$, les lignes et les colonnes servant à véhiculer des signaux électriques provoquant une excitation du matériau propre à modifier sa caractéristique optique, caractérisé en ce qu'il comprend en outre un dispositif de compensation du couplage entre les lignes et les colonnes constitué d'au moins une électrode de compensation (22, 24, Fig. 3), croisant toutes les électrodes de la première famille d'électrodes (18, Fig. 3) et étant séparées de celles-ci par un diélectrique, et étant parallèle aux électrodes de la seconde famille d'électrodes (20, Fig. 2; 20a, 20b, Fig. 3) et des moyens pour porter cette électrode de compensation à une tension ($V_{c1}$, Fig. 3) appropriée telle qu'apparaissent des charges électriques sur chaque ligne non sélectionnée d'électrode (18) de manière que la somme algébrique des charges électriques sur chacune desdites lignes d'électrodes (18) soit nulle à chaque instant.

2. Imageur selon la revendication 1, caractérisé en ce qu'il comprend deux électrodes de compensation (22, 24, Fig. 3) disposées de part et d'autre des q électrodes de la deuxième famille d'électrodes (20a, 20b, Fig. 3).

3. Imageur selon l'une quelconque des revendications 1 et 2, caractérisé en ce que le diélectrique entre les électrodes de compensation (22, 24) et les électrodes de la première famille d'électrodes (18) est le même que le diélectrique entre les électrodes de la première famille d'électrodes (18) et les électrodes de la seconde famille d'électrodes (20, 20a, 20b).

## Patentansprüche

1. Elektrisch gesteuerte Matrixanzeigeeinrichtung mit einem Material (14, Fig. 2), dessen optische Eigenschaften man verändern kann und welches zwischen einer ersten Gruppe von p parallelen Zeilenelektroden (18, Fig. 2, 3) und einer zweiten Gruppe von q parallelen Spaltenelektroden (20, Fig. 2; 20a, 20b, Fig. 3) eingefügt ist, wobei die Zeilen der Spalten gekreuzt sind und ein Bereich $X_{ij}$ des Materials durch den Bereich des Materials bestimmt ist, der von der Zeile i, mit i einer ganzen Zahl wie $1 \leqslant i \leqslant p$, und der Spalte j, mit j einer ganzen Zahl wie $1 \leqslant j \leqslant q$, überdeckt ist, wobei die Zeilen und Spalten zum Transport von elektrischen Signalen dienen, die eine zur Änderung der optischen Eigenschaft geeignete Anregung des Materials hervorrufen, dadurch gekennzeichnet, dass die Matrixanzeigeeinrichtung ferner umfasst eine Kompensationseinrichtung für die Kopplung zwischen den Zeilen und den Spalten, die von wenigstens einer Kompensationselektrode (22, 24, Fig. 3) gebildet ist, die alle Elektroden der ersten Gruppe von Elektroden (18, Fig. 3) kreuzt und von diesen durch ein Dielektrikum getrennt ist und parallel zu den Elektroden der zweiten Gruppe von Elektroden (20, Fig. 2; 20a, 20b, Fig. 3) verläuft, sowie Mittel, um diese Ausgleichselektrode auf eine derart geeignete Spannung ($V_{c1}$, Fig. 3) zu bringen, dass auf jeder nichtausgewählten Zeilenelektrode (18) elektrische Ladungen derart erscheinen, dass die algebraische Summe der elektrischen Ladungen auf jeder Zeilenelektrode (18) zu jedem Zeitpunkt Null ist.

2. Anzeigeeinrichtung nach Anspruch 1, dadurch gekennzeichnet, dass sie zwei Kompensationselektroden (22, 24, Fig. 3) aufweist, die beidseitig der q Elektroden der zweiten Elektrodengruppe (20a, 20b, Fig. 3) angeordnet sind.

3. Anzeigeeinrichtung nach Anspruch 1 oder 2, dadurch gekennzeichnet, dass das Dielektrikum zwischen den Ausgleichselektroden (22, 24) und den Elektroden der ersten Gruppe von Elektroden (18) das gleiche wie das Dielektrikum zwischen den Elektroden der ersten Gruppe von Elektroden (18) und den Elektroden der zweiten Gruppe von Elektroden (20, 20a, 20b) ist.

## Claims

1. Electrically controlled matrix imaging device comprising a material (14, Fig. 2), the optical characteristic of which may be modified, this material (14) being interposed between a first group of p parallel lines of electrodes (18, Fig. 2, 3) and a second group of q parallel columns of electrodes (20, Fig. 2; 20a, 20b, Fig. 3), the lines and the columns being crossed, a zone $X_{ij}$ of the material being defined by the region of the material covered by the line i, where i is an integer such that $1 \leqslant i \leqslant p$, and by the column j, where j is an integer such that $1 \leqslant j \leqslant q$, the lines and the columns serving to carry electrical signals causing an excitation of the material suitable to modify its optical characteristic, characterized in that it further comprises a device for compensating the coupling between the lines and the columns, which device is constituted by at least one compensating electrode (22, 24, Fig. 3), crossing all the electrodes of the first group of electrodes (18, Fig.3) and being separated from the latter by a dielectric and being parallel to the electrodes of the second group of electrodes (20, Fig. 2; 20a, 20b, Fig. 3) and means for bringing this compensating electrode to an appropriate voltage ($V_{c1}$, Fig. 3) such that electric charges appear on each non-selected electrode line (18) in such a manner that the algebraic sum of the electric charges on each one of the said lines of electrodes (18) is zero at each instant.

2. Imaging device according to Claim 1, characterized in that it includes two compensating electrodes (22, 24, Fig. 3) disposed on both sides of the q electrodes of the second group of electrodes (20a, 20b, Fig. 3).

3. Imaging device according to either one of Claims 1 and 2, characterized in that the dielectric between the compensating electrodes (22, 24) and the electrodes of the first group of electrodes (18) is the same as the dielectric between the electrodes of the first group of electrodes (18) and the electrodes of the second group of electrodes (20, 20a, 20b).

FIG.1

# FIG.2

# FIG.3